# EUROPÄISCHE PATENTSCHRIFT

(11) **EP 0 615 956 B1**
(45) Veröffentlichungstag und Bekanntmachung des Hinweises auf die Patenterteilung: **22.04.1998**
(21) Anmeldenummer: 94102124.8
(22) Anmeldetag: 11.02.1994
(51) Int. Cl.: C01B 33/36, C11D 3/12

(54) **Verfahren zur Herstellung von Gemischen aus synthetischem, kristallinem Kenyait und sauerstoffabspaltenden Salzen**
Process for the preparation of mixtures of synthetic crystalline kenyaite and oxygen releasing salts
Procédé de préparation de mélanges de kenyaite cristalline synthétique et de sels libérant de l'oxygène

(30) Priorität: 13.03.1993 DE 4308062
(43) Veröffentlichungstag der Anmeldung: 21.09.1994
(73) Patentinhaber: Clariant GmbH, 65929 Frankfurt am Main (DE)
(72) Erfinder: Bauer, Harald, Dr., D-65439 Flörsheim (DE)

(56) Entgegenhaltungen:
- EP-A- 0 175 287
- EP-A- 0 205 070
- DD-A- 220 326
- DD-A- 234 878
- SEIFEN - öLE - FETTE - WACHSE, Nr.113, 1987 Seiten 555 - 561 K. H. BERGK ET AL

## Beschreibung

Die Erfindung betrifft ein Verfahren zur Herstellung von Gemischen aus synthetischem, kristallinem Kenyait und sauerstoffabspaltenden Salzen.

Die EP-A-0 205 070 beschreibt ein Verfahren zur Herstellung eines kristallinen Alkalischichtsilikates des Hektorit-Typs, bei dem man eine wäßrige Lösung von Alkalisilikat oder eine Aufschlämmung von amorphem Alkalisilikat bei Temperaturen von 70 bis 250 °C solange reagieren läßt bis das Alkalischichtsilikat auskristallisiert. Nach dem Beginn der Kristallisation setzt man eine saure Verbindung in einer solchen Menge zu, daß ständig in der Mutterlauge einer abfiltrierten Probe ein Verhältnis M₂O (nicht neutralisiert)/SiO₂ von 0,05 : 1 bis 0,8 : 1 eingehalten wird, wobei die Verwendung von Impfkristallen des gewünschten Schichtsilikats günstig ist.

Die DD-A-220 326 beschreibt einen Weißgradverstärker, der unter anderem ein Alkalischichtsilikat des Hektorit-Typs enthält.

Die DD-A-234 878 betrifft ein Verfahren zur Herstellung von Waschmittelrohstoffgemischen, die Alkalischichtsilikate des Hektorit-Typs enthalten.

Kenyait kann gemäß der DE-A-34 00 130 nach einem sehr aufwendigen Verfahren hergestellt werden. Kenyait wird in der DE-A-34 00 130 als Natriumsalz(I) bzw. Na-SKS-1 bezeichnet.

Kristalline Schichtsilikate, zu denen der Kenyait zählt, wirken als Ionenaustauscher und werden Waschmitteln als Enthärter zugesetzt. Waschmittel enthalten oft Peroxide als Bleich-, Oxidations- und Desinfektionsmittel. Bei der Lagerung des Waschmittels kommt es zu einem unerwünschten Peroxidabbau.

Es war daher die Aufgabe gestellt, ein Verfahren zur Herstellung von Gemischen aus synthetischem, kristallinem Kenyait und sauerstoffabspaltenden Salzen zu finden, bei dem keine Salzbildung zu einer unerwünschten Abwasserbelastung führt, das auf preiswerten Ausgangssubstanzen basiert, mit guten Raum-Zeit-Ausbeuten arbeitet und bei dem nur eine geringe Peroxidzersetzung eintritt.

Das wird erfindungsgemäß dadurch erreicht, daß man bei der Herstellung eines Gemisches aus Kenyait und sauerstoffabspaltenden Salzen 1 Mol Natronwasserglas, welches ein molares Verhältnis von SiO₂ : Na₂O = 1 : (o,25 bis o,5) hat, mit o,1 bis o,9 Mol einer Verbindung, welche in molarer wäßriger Konzentration einen pH-Wert von kleiner 1o,5 hat, als Neutralisationsmittel vermischt und in Gegenwart von Kenyait-Impfkristallen bei Temperaturen von 373 bis 523 K, insbesondere 453 bis 493 K, im Autoklaven 1 bis 1o Stunden lang erhitzt, und nach dem Abkühlen o,1 bis 1,5 Mol Wasserstoffperoxid, bezogen auf 1 Mol eingesetztes Natronwasserglas, zugibt und aus der Reaktionssuspension den Feststoff als Trockensubstanz isoliert.

Das Verfahren gemäß der Erfindung kann weiterhin wahlweise auch noch dadurch ausgestaltet sein, daß man
a) als Neutralisationsmittel insbesondere Peroxidsalze bildende Verbindungen wie Phosphorsäure, Borsäure, Kieselsäure, Kohlendioxid, Alkalihydrogencarbonat, Alkalidihydrogenphosphat oder Natriumtetraborat verwendet;
b) die Menge an Neutralisationsmittel so dosiert, daß in der Reaktionssuspension ein Verhältnis von SiO₂ : Na₂O = (4 bis 2o) : 1 vorliegt;
c) das Wasserstoffperoxid in Form einer 5 bis 75 gewichts%igen wäßrigen Lösung zugibt;
d) 0,5 bis 10 Gew% Impfkristalle, bezogen auf den SiO₂-Gewichtsanteil im Natronwasserglas, zugibt;
e) die Umsetzung im Autoklaven bei einem molaren Verhältnis von SiO₂ : H₂O = 1 : (5 bis 100) durchführt;
f) die Reaktion in Gegenwart von Aluminium-, Phosphor-, Bor- und/oder Schwermetall-Verbindungen, wie beispielsweise Eisen durchführt;
g) die Reaktionsmischung vor dem Erhitzen auf einen pH-Wert von 9 bis 12 einstellt;
h) die Reaktion kontinuierlich durchführt;
i) bei der kontinuierlichen Arbeitsweise in 5 bis 30 Gew% Impfkristalle, bezogen auf den SiO₂-Gewichtsanteil im Natronwasserglas, zugibt;
j) der Reaktionssuspension peroxidstabilisierende Verbindungen wie beispielsweise Magnesiumsilikat, Ethylendiamintetraessigsäure, Tripolyphosphor-, Pyrophosphor- oder Orthophosphorsäure jeweils in Form ihrer Natriumsalze zugibt;
k) den Feststoff und die in der Reaktionssuspension gelösten Stoffe durch eine Unterdruckverdampfung als Trockensubstanz isoliert;
l) die Reaktionssuspension mit einem erwärmten Gasstrom bei einer Feststofftemperatur zwischen 3o3 und 363 K beispielsweise in einem Wirbelbetttrockner, Trommeltrockner, Sprühtrockner oder Granulator als Trockensubstanz isoliert;
m) die Reaktionssuspension in einen Filterkuchen und Filtrat trennt und getrennt trocknet und die erhaltenen Trockenstoffe miteinander vermischt;
n) einen Teil des Wasserstoffperoxids dem Filtrat zusetzt, zur Trockene eindampft und in zerkleinerter Form mit dem getrockneten Filterkuchen vereinigt.
o) 1 Mol Natronwasserglas, welches ein molares Verhältnis von SiO₂ : Na₂O = 1 : (o,25 bis o,5) hat, mit o,1 bis o,9 Mol einer Verbindung, welche in molarer wäßriger Konzentration einen pH-Wert von kleiner als 1o,5 hat, als Neutralisationsmittel vermischt und in Gegenwart von Kenyait-Impfkristallen bei Temperaturen von 373 bis 523 K, insbesondere 453 bis 493 K, im Autoklaven 1 bis 1o Stunden lang erhitzt und, in Abänderung des Patentanspruchs 1, die Trockensubstanz isoliert und zu dieser Trockensubstanz o,15 bis 1,5 Mol Wasserstoffperoxid, bezogen auf 1 Mol eingesetztes Natronwasserglas, zugibt.

Das nach dem erfindungsgemäßen Verfahren hergestellte Gemisch kann man zum Waschen, Reinigen, Bleichen oder Spülen von Textilien oder Geschirr allein oder zusammen mit üblichen Hilfsstoffen wie beispielsweise Tenside, Zeolithe, Tripolyphosphate, Gerüststoffe oder Oxicarboxylate einsetzen.

Für die Synthese von Kenyait werden bei Reaktionstemperaturen von 468 bis 493 K Reaktionszeiten von maximal 6 Stunden benötigt.

Die Zugabe von Impfkristallen ist von wesentlichem Einfluß auf die Art der auskristallisierenden Schichtsilikate und die Reaktionszeiten. Kenyait entsteht jedoch auch, in verminderter Reinheit, bei längeren Reaktionszeiten ohne Zugabe von Impfkristallen. Es ist selbstverständlich, daß auch das fertige Salzgemisch oder die Suspension als Impfkristall zugesetzt werden können.

Es ist für eine kontinuierliche Reaktionsführung vorteilhaft, den Autoklaven nicht vollständig zu entleeren, sondern stets mindestens teilweise mit Produktmischung gefüllt zu halten, die aus dem auskristallisierten Silikat, der Mutterlauge sowie nicht umgesetzten Ausgangsprodukten entsteht. Damit verbleibt ein hoher Anteil an Silikat-Kristallen im Autoklaven, die die weitere Bildung von kristallinem Silikat fördern.

Die Umsetzung der Alkalimetallsalze mit Wasserstoffperoxid kann in demselben Behälter der Schichtsilikatsynthese erfolgen. Es ist dann von Vorteil, die gesamte Reaktionslösung einzudampfen.

Erfindungsgemäß können Gemische erhalten werden, die bis zu 19,6, vorzugsweise bis 13,9 Gew% Peroxid enthalten.

Mit dem erfindungsgemäßen Verfahren entfällt auch die herstellungsbedingte Salzfracht des Abwassers, die aus der Natriumcarbonatperoxohydrat-Herstellung resultiert.

Natriumcarbonatperoxohydrat, welches als Bleich-, Oxidations- und Desinfektionsmittel Verwendung findet, wird aus wäßrigen Lösungen von Natriumcarbonat und Wasserstoffperoxid erhalten, wobei Natriumchlorid, Natriumpolyphosphate oder Polyacrylate als Aussalz- und Kristallisationshilfsmittel dienen (vgl. "Ullmanns Encyklopädie der technischen Chemie", 4. Auflage, Band 17, Seiten 724/725).

Die guten Eigenschaften des erfindungsgemäßen Gemisches beruhen einerseits auf der Ionenaustauschfähigkeit des Schichtsilikates, wodurch die Härtebildner des Waschwassers nicht ausfallen, andererseits, wegen der deutlich geringeren Alkalität, auf einer deutlichen Lagerstabilisierung des Peroxidgehaltes.

Bei Produkten, welche nach der wahlweisen Ausgestaltung o) hergestellt werden, liegt eine geringere Lagerstabilität des Peroxids vor.

Die Erfindung wird anhand der Beispiele näher erläutert.

### Beispiel 1

1643 g Reaktionsmischung der molaren Zusammensetzung o,311 Na₂O : 0,0054 Al₂O₃ : 1 SiO₂ : 32,6 H₂O wird aus 563 Gewichtsteilen Natronwasserglas (26,3 % SiO₂, 8,43 % Na₂O, 0,24 % Al₂O₃) und 1o8o g Gewichtsteilen Wasser hergestellt. Danach werden 4 g kristalliner Kenyait aus einem früheren Versuch zugegeben. Man leitet bei 347 K unter Rühren CO₂ bis zu einem pH-Wert von 9,1 ein. Die Reaktionsmischung wird unter Rühren in einem Edelstahlautoklaven auf 478 K erhitzt und bei einem Druck von 16 bar 4 Stunden unter diesen Bedingungen gehalten. Nach dem Abkühlen wird die Suspension mit 59,1 g H₂O₂ (70 gew.-%ig) versetzt und zur Trockene eingedampft. Man erhält 281,7 g eines Gemisches aus Kenyait und Natriumpercarbonat mit einem Peroxid-Gehalt von 8,86 Gew% (als H₂O₂).

### Beispiel 2

Entsprechend Beispiel 1 wird eine Wasserglaslösung mit Kenyait-Impfkristallen hergestellt. Unter Rühren werden 74,8 g NaHCO₃ zugesetzt. Das Reaktionsgemisch wird wie im Beispiel 6 weiterbehandelt. Nach dem Abkühlen wird die Sus-pension mit 84,9 g H₂O₂ (70 gew.-%ig) versetzt und zur Trockene eingedampft. Man erhält 296,9 g eines Gemisches aus Kenyait und Natriumpercarbonat mit einem Peroxid-Gehalt von 10,93 Gew% (als H₂O₂).

## Patentansprüche

1. Verfahren zur Herstellung von Gemischen aus synthetischem, kristallinem Kenyait und sauerstoffabspaltenden Salzen, dadurch gekennzeichnet, daß man 1 Mol Natronwasserglas, welches ein molares Verhältnis von SiO₂ : Na₂O = 1 : (o,25 bis o,5) hat, mit o,1 bis o,9 Mol einer Verbindung, welche in molarer wäßriger Konzentration einen pH-Wert von kleiner als 1o,5 hat, als Neutralisationsmittel vermischt und in Gegenwart von Kenyait-Impfkristallen bei Temperaturen von 373 bis 523 K, insbesondere von 453 bis 493 K, im Autoklaven 1 bis 1o Stunden lang erhitzt, und nach dem Abkühlen o,15 bis 1,5 Mol Wasserstoffperoxid, bezogen auf 1 Mol eingesetztes Natronwasserglas, zugibt und aus der Reaktionssuspension den Feststoff als Trockensubstanz isoliert.

2. Verfahren nach Anspruch 1, dadurch gekennzeichnet, daß man als Neutralisationsmittel insbesondere Peroxidsalze bildende Verbindungen wie Phosphorsäure, Borsäure, Kieselsäure, Kohlendioxid, Alkalihydrogencarbonat, Alkalidihydrogenphosphat oder Natriumtetraborat verwendet.

3. Verfahren nach einem der Ansprüche 1 oder 2, dadurch gekennzeichnet, daß man die Menge an Neutralisationsmittel so dosiert, daß in der Reaktionssuspension ein Verhältnis von SiO₂ : Na₂O = (4 bis 2o) : 1 vorliegt.

4. Verfahren nach einem der Ansprüche 1 bis 3, dadurch gekennzeichnet, daß man das Wasserstoffperoxid in Form einer 5 bis 75 gewichts%igen wäßrigen Lösung zugibt.

5. Verfahren nach einem der Ansprüche 1 bis 4, dadurch gekennzeichnet, daß man 0,5 bis 10 Gew% Impfkristalle, bezogen auf den SiO₂-Gewichtsanteil im Natronwasserglas, zugibt.

6. Verfahren nach einem der Ansprüche 1 bis 5, dadurch gekennzeichnet, daß man die Umsetzung im Autoklaven bei einem molaren Verhältnis von SiO₂ : H₂O = 1 : (5 bis 100) durchführt.

7. Verfahren nach einem der Ansprüche 1 bis 6, dadurch gekennzeichnet, daß man die Reaktion in Gegenwart von Aluminium-, Phosphor-, Bor- und/oder Schwermetall-Verbindungen wie beispielsweise Eisen durchführt.

8. Verfahren nach einem der Ansprüche 1 bis 7, dadurch gekennzeichnet, daß man die Reaktionsmischung vor dem Erhitzen auf einen pH-Wert von 9 bis 12 einstellt.

9. Verfahren nach einem der Ansprüche 1 bis 8, dadurch gekennzeichnet, daß man die Reaktion kontinuierlich durchführt.

10. Verfahren nach Anspruch 9, dadurch gekennzeichnet, daß man bei der kontinuierlichen Arbeitsweise 5 bis 30 Gew% Impfkristalle, bezogen auf den SiO₂-Gewichtsanteil im Natronwasserglas, zugibt.

11. Verfahren nach einem der Ansprüche 1 bis 10, dadurch gekennzeichnet, daß man der Reaktionssuspension peroxidstabilisierende Verbindungen wie beispielsweise Magnesiumsilikat, Etyhlendiamintetraessigsäure, Tripolyphosphor-, Pyrophosphor- oder Orthophosphorsäure jeweils in Form ihrer Natriumsalze zugibt.

12. Verfahren nach einem der Ansprüche 1 bis 11, dadurch gekennzeichnet, daß man den Feststoff und die in der Reaktionssuspension gelösten Stoffe durch eine Unterdruckverdampfung als Trockensubstanz isoliert.

13. Verfahren nach einem der Ansprüche 1 bis 11, dadurch gekennzeichnet, daß man die Reaktionssuspension mit einem erwärmten Gasstrom bei einer Feststofftemperatur zwischen 3o3 und 363 K beispielsweise in einem Wirbelbetttrockner, Trommeltrockner, Sprühtrockner oder Granulator als Trockensubstanz isoliert.

14. Verfahren nach einem der Ansprüche 1 bis 11, dadurch gekennzeichnet, daß man die Reaktionssuspension in einen Filterkuchen und Filtrat trennt und getrennt trocknet und die erhaltenen Trockenstoffe miteinander vermischt.

15. Verfahren nach Anspruch 14, dadurch gekennzeichnet, daß man einen Teil des Wasserstoffperoxids dem Filtrat zusetzt, zur Trockene eindampft und in zerkleinerter Form mit dem getrockneten Filterkuchen vereinigt.

16. Verfahren nach einem der Ansprüche 1 bis 13, dadurch gekennzeichnet, daß man 1 Mol Natronwasserglas, welches ein molares Verhältnis von SiO₂ : Na₂O = 1 : (o,25 bis o,5) hat, mit o,1 bis o,9 Mol einer Verbindung, welche in molarer wäßriger Konzentration einen pH-Wert von kleiner als 1o,5 hat, als Neutralisationsmittel vermischt und in Gegenwart von Kenyait-Impfkristallen bei Temperaturen von 373 bis 523 K, insbesondere 453 bis 493 K, im Autoklaven 1 bis 1o Stunden lang erhitzt und, in Abänderung des Patentanspruchs 1, die Trockensubstanz isoliert und zu dieser Trockensubstanz o,15 bis 1,5 Mol Wasserstoffperoxid, bezogen auf 1 Mol eingesetztes Natronwasserglas, zugibt.

## Claims

1. A process for the preparation of a mixture of synthetic, crystalline kenyaite and salts which split off oxygen, which comprises mixing 1 mol of soda-water glass which has a molar ratio of SiO₂ : Na₂O = 1 : (0.25 to 0.5) with 0.1 to 0.9 mol of a compound which has a pH of less than 10.5 in molar aqueous concentration, as a neutralizing agent, heating the mixture at temperatures of 373 to 523 K, in particular of 453 to 493 K, in an autoclave for 1 to 10 hours in the presence of kenyaite seed crystals, and, after cooling, adding 0.15 to 1.5 mol of hydrogen peroxide per mole of soda-water glass employed and isolating the solid from the reaction suspension as dry substance.

2. The process as claimed in claim 1, wherein, in particular, peroxide salt-forming compounds such as phosphoric acid, boric acid, silicic acid, carbon dioxide, alkali metal hydrogencarbonate, alkali metal dihydrogen phosphate or sodium tetraborate are used as the neutralizing agent.

3. The process as claimed in either of claims 1 or 2, wherein the amount of neutralizing agent is metered in such that a ratio of SiO₂ : Na₂O = (4 to 20) : 1 is present in the reaction suspension.

4. The process as claimed in any one of claims 1 to 3, wherein the hydrogen peroxide is added in the form of a 5 to 75 % by weight aqueous solution.

5. The process as claimed in any one of claims 1 to 4, wherein 0.5 to 10 % by weight of seed crystals, based on the SiO₂ weight content in the soda-water glass, is added.

6. The process as claimed in any one of claims 1 to 5, wherein the reaction is carried out in an autoclave at a molar ratio of SiO₂ : H₂O = 1 : (5 to 100).

7. The process as claimed in any one of claims 1 to 6, wherein the reaction is carried out in the presence of aluminum, phosphorus, boron and/or heavy metal compounds, such as, for example, iron.

8. The process as claimed in any one of claims 1 to 7, wherein the reaction mixture is brought to a pH of 9 to 12 before heating.

9. The process as claimed in any one of claims 1 to 8, wherein the reaction is carried out continuously.

10. The process as claimed in claim 9, wherein, in the continuous procedure, 5 to 30 % by weight of seed crystals, based on the SiO₂ weight content in the soda-water glass, are added.

11. The process as claimed in any one of claims 1 to 10, wherein peroxidestabilizing compounds such as, for example, magnesium silicate, ethylenediaminetetraacetic acid or tripolyphosphoric, pyrophosphoric or orthophosphoric acid, in each case in the form of their sodium salts, are added to the reaction suspension.

12. The process as claimed in any one of claims 1 to 11, wherein the solid and the substances dissolved in the reaction suspension are isolated as dry substance by vacuum evaporation.

13. The process as claimed in any one of claims 1 to 11, wherein the reaction suspension is isolated as dry substance with a heated stream of gas at a solids temperature of between 303 and 363 K, for example in a fluidized bed drier, drum drier, spray drier or granulator.

14. The process as claimed in any one of claims 1 to 11, wherein the reaction suspension is separated into a filtercake and filtrate, which are dried separately, and the resulting dry substances are mixed with one another.

15. The process as claimed in claim 14, wherein some of the hydrogen peroxide is added to the filtrate, the mixture is evaporated to dryness and the residue is combined in comminuted form with the dried filtercake.

16. The process as claimed in any one of claims 1 to 13, wherein 1 mol of soda-water glass which has a molar ratio of SiO₂ : Na₂O = 1 : (0.25 to 0.5) is mixed with 0.1 to 0.9 mol of a compound which has a pH of less than 10.5 in molar aqueous concentration, as a neutralizing agent, the mixture is heated at temperatures of 373 to 523 K, in particular 453 to 493 K, in an autoclave for 1 to 10 hours in the presence of kenyaite seed crystals and, in a modification of patent claim 1, the dry substance is isolated and 0.15 to 1.5 mol of hydrogen peroxide per mole of soda-water glass employed are added to this dry substance.

## Revendications

1. Procédé de préparation de mélanges de kenyaïte cristalline synthétique et de sels libérant de l'oxygène, caractérisé en ce que l'on mélange 1 mol de verte soluble, qui a un rapport molaire SiO₂ : Na₂O = 1 : (0,25 à 0,5), avec 0,1 à 0,9 mol d'un composé qui, en concentration aqueuse molaire, a un pH inférieur à 10,5, comme agent de neutralisation, et on chauffe en autoclave pendant 1 à 10 h en présence de germes cristallins de kenyaïte, à des températures 373 à 523 K, en particulier de 453 à 493 K et, après le refroidissement, on ajoute 0,15 à 1,5 mol de peroxyde d'hydrogène par mole de verre soluble utilisé, et on isole le solide sous forme de substance sèche à partir de la suspension réactionnelle.

2. Procédé selon la revendication 1, caractérisé en ce que l'on utilise comme agent de neutralisation en particulier des composés formant des sels de peroxydes comme l'acide phosphorique, l'acide borique, l'acide silicique, le dioxyde de carbone, un hydrogénocarbonate alcalin, un dihydrogénophosphate alcalin ou le tétraborate de sodium.

3. Procédé selon l'une des revendications 1 et 2, caractérisé en ce que l'on dose la quantité d'agent de neutralisation de manière qu'il y ait dans la suspension réactionnelle un rapport SiO₂ : Na₂O = (4 à 20) : 1.

4. Procédé selon l'une des revendications 1 à 3, caractérisé en ce que l'on ajoute le peroxyde d'hydrogène sous forme d'une solution aqueuse à 5 à 75 % en masse.

5. Procédé selon l'une des revendications 1 à 4, caractérisé en ce que l'on ajoute 0,5 à 10 % en masse de germes cristallins par rapport à la proportion massique de SiO₂ dans le verre soluble.

6. Procédé selon l'une des revendications 1 à 5, caractérisé en ce que l'on conduit la réaction en autoclave à un rapport molaire SiO₂ : H₂O = 1 : (5 à 100).

7. Procédé selon l'une des revendications 1 à 6, caractérisé en ce que l'on conduit la réaction en présence de composés de l'aluminium, du phosphore, du bore et/ou de métaux lourds, comme par exemple le fer.

8. Procédé selon l'une des revendications 1 à 7, caractérisé en ce que l'on ajuste le mélange réactionnel à un pH de 9 à 12 avant le chauffage.

9. Procédé selon l'une des revendications 1 à 8, caractérisé en ce que l'on conduit la réaction en continu.

10. Procédé selon la revendication 9, caractérisé en ce que, dans le cas du mode opératoire continu, on ajoute 5 à 30 % en masse de germes cristallins par rapport à la proportion massique de SiO₂ dans le verre soluble.

11. Procédé selon l'une des revendications 1 à 10, caractérisé en ce que l'on ajoute à la suspension réactionnelle des composés stabilisant les peroxydes comme par exemple le silicate de magnésium, l'acide éthylènediaminetétraacétique, l'acide tripolyphosphorique, pyrophosphorique ou orthophosphorique, dans chaque cas sous forme de leurs sels de sodium.

12. Procédé selon l'une des revendications 1 à 11, caractérisé en ce que l'on isole sous forme de substance sèche le solide et les substances dissoutes dans la suspension réactionnelle par une évaporation sous vide.

13. Procédé selon l'une des revendications 1 à 11, caractérisé en ce que l'on isole sous forme de substance sèche la suspension réactionnelle avec un courant gazeux chauffé à une température du solide comprise entre 303 et 363 K, par exemple dans un sécheur à lit fluidisé, un sécheur à tambour, un sécheur à pulvérisation ou un granulateur.

14. Procédé selon l'une des revendications 1 à 11, caractérisé en ce que l'on sépare la suspension réactionnelle en un gâteau de filtration et un filtrat, on sèche séparément et on mélange entre elles les substances sèches obtenues.

15. Procédé selon la revendication 14, caractérisé en ce que l'on ajoute une partie du peroxyde d'hydrogène au filtrat, on évapore à siccité et on réunit sous forme broyée avec le gâteau de filtration séché.

16. Procédé selon l'une des revendications 1 à 13, caractérisé en ce que l'on mélange 1 mol de verre soluble, qui a un rapport molaire SiO₂ : Na₂O = 1 : (0,25 à 0,5), avec 0,1 à 0,9 mol d'un composé qui, en concentration aqueuse molaire, a un pH inférieur à 10,5, comme agent de neutralisation, et on chauffe en autoclave pendant 1 à 10 h en présence de germes cristallins de kenyaïte à des températures de 373 à 523 K, en particulier de 453 à 493 K et, à la différence de la revendication 1, on isole la susbstance sèche et on ajoute à cette substance sèche 0,15 à 1,5 mol de peroxyde d'hydrogène par mole de verre soluble utilisé.
